(19) Europäisches Patentamt
European Patent Office
Office européen des brevets

(11) Veröffentlichungsnummer: **0 518 127 A1**

(12) # EUROPÄISCHE PATENTANMELDUNG

(21) Anmeldenummer: **92108915.7**

(22) Anmeldetag: **27.05.92**

(51) Int. Cl.$^5$: **C08J 9/14**, //C08L75/04

(30) Priorität: **13.06.91 DE 4119459**

(43) Veröffentlichungstag der Anmeldung: **16.12.92 Patentblatt 92/51**

(84) Benannte Vertragsstaaten: **AT BE CH DE DK ES FR GB IT LI NL PT SE**

(71) Anmelder: **BASF Aktiengesellschaft**
**Carl-Bosch-Strasse 38**
**W-6700 Ludwigshafen(DE)**

(72) Erfinder: **Volkert, Otto, Dr.**
**Im Eiertal 10**
**W-6719 Weisenheim(DE)**
Erfinder: **Maurer, Walter, Dr.**
**Pfalzring 200**
**W-6704 Mutterstadt(DE)**

(54) **Verfahren zur Herstellung von zellhaltigen Kunststoffen nach dem Polyisocyanat-Polyadditionsverfahren und niedrigsiedende, fluorierte und/oder perfluorierte, tertiäre Alkylamine als Treibmittel enthaltende Emulsionen hierfür.**

(57) Gegenstände der Erfindung sind ein Verfahren zur Herstellung von zellhaltigen Kunststoffen nach dem Polyisocyanat-Polyadditionsverfahren durch Umsetzung von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart von

d) Treibmitteln,

e) Katalysatoren,

f) Hilfsmitteln und/oder Zusatzstoffen,

wobei als Treibmittel (d) verwendet werden

d1) niedrigsiedende, fluorierte und/oder perfluorierte, tertiäre Alkylamine

oder

Mischungen aus (d1) und mindestens einem weiteren, von (d1) verschiedenen, physikalisch wirkenden und/oder chemischen gebildeten Treibmittel (d2)

sowie treibmittelhaltigen Emulsionen aus den vorgenannten Treibmitteln (d1) oder der Treibmittelmischung aus (d1) und (d2) sowie den Aufbaukomponenten (a), (b), (c) oder (b) und (c).

EP 0 518 127 A1

Gegenstände der Erfindung sind ein verfahren zur Herstellung von zellhaltigen Kunststoffen nach dem Polyisocyanat-Polyadditionsverfahren, die im folgenden auch als Polyisocyanat-Polyadditionsprodukte bezeichnet werden, wobei als Treibmittel niedrigsiedende, fluorierte und/oder perfluorierte tertiäre Alkylamine (d1) oder Mischungen aus (d1) und mindestens einem weiteren, von (d1) verschiedenen, physikalisch wirkenden und/oder chemischen Treibmittel (d2) verwendet werden und die Treibmittel (d1) üblicherweise in den organischen Polyisocyanaten oder Verbindungen mit mindestens zwei reaktiven Wasserstoffatomen in den erforderlichen Mengen schwer- oder unlöslich sind und daher in mindestens einer dieser Aufbaukomponenten emulgiert werden
sowie treibmittelhaltige Emulsionen aus den vorgenannten Treibmitteln (d1) oder den Mischungen aus (d1) und (d2) und mindestens einer Aufbaukomponente (a), (b) oder (c) zur Herstellung der Polyisocyanat-Polyadditionsprodukte.

Die Herstellung von zellhaltigen Polyisocyanat-Polyadditionsprodukten, wie z.B. zelligen Polyurethan-Elastomeren und flexiblen, halbharten oder harten Polyurethan-Schaumstoffen, durch Umsetzung von organischen Polyisocyanaten und/oder modifizierten organischen Polyisocyanaten mit höhermolekularen Verbindungen mit mindestens zwei reaktiven Wasserstoffatomen, beispielsweise Polyoxyalkylen-polyaminen und/oder vorzugsweise organischen Polyhydroxylverbindungen mit Molekulargewichten von z.B. 500 bis 12 000 und gegebenenfalls Kettenverlängerungs- und/oder Vernetzungsmitteln mit Molekulargewichten bis ungefähr 500 in Gegenwart von Katalysatoren, Treibmitteln, Hilfsmitteln und/oder Zusatzstoffen ist bekannt aus zahlreichen Patent- und Literaturveröffentlichungen. Durch geeignete Wahl der Aufbaukomponenten Polyisocyanat, höhermolekularen Verbindungen mit reaktiven Wasserstoffatomen und gegebenenfalls Kettenverlängerungs- und/oder Vernetzungsmitteln können nach dieser Methode elastische oder starre, zellhaltige Polyisocyanat-Polyadditionsprodukte sowie alle dazwischen liegende Modifikationen hergestellt werden.

Eine Übersicht über die Herstellung von zelligen Polyurethan(PU)-Elastomeren, Polyurethan(PU)-Schaumstoffen und Polyisocyanurat(PIR)-Schaumstoffen, ihre mechanische Eigenschaften und ihre Verwendung wird beispielsweise in den Monographien High Polymers, Band XVI, "Polyurethanes", Teil I und II von J.H. Saunders und K.C. Frisch (Verlag Interscience Publishers, New York 1962 bzw. 1964), Kunststoff-Handbuch, Band VII, "Polyurethane", 1. Auflage 1966, herausgegeben von Dr. R. Vieweg und Dr. A. Höchtlen und 2. Auflage, 1983, herausgegeben von Dr. G. Oertel (Carl Hanser Verlag, München) und "Integralschaumstoffe", herausgegeben von Dr. H. Piechota und Dr. H. Röhr (Carl Hanser Verlag, München, Wien 1975) gegeben.

Zur Herstellung von zellhaltigen Kunststoffen nach dem Polyisocyanat-Polyadditionsverfahren werden im wesentlichen zwei Arten von Treibmitteln verwendet:
Niedrigsiedende, inerte Flüssigkeiten, die unter dem Einfluß der exothermen Polyadditionsreaktion verdampfen, beispielsweise Alkane, wie Butan, Pentan u.a. oder vorzugsweise halogenierte Kohlenwasserstoffe, wie Methylenchlorid, Dichlormonofluormethan, Trichlorfluormethan u.a. und chemische Verbindungen, die durch eine chemische Reaktion oder thermische Zersetzung Treibgase bilden. Beispielhaft genannt seien die Umsetzung von Wasser mit Isocyanaten unter Bildung von Aminen und Kohlendioxid, die synchron zur Polyurethanherstellung abläuft und die Spaltung von thermisch labilen Verbindungen wie z.B. Azoisobuttersäurenitril, das neben Stickstoff als Spaltprodukt toxisches Tetramethylbernsteinsäuredinitril ergibt oder Azodicarbonamid, dessen Verwendung als Bestandteil einer Treibmittelkombination in der EP-A 0 092 740 (CA 1 208 912) beschrieben wird. Während die zuletzt genannte Methode, bei der thermisch labile Verbindungen wie z.B. Azoverbindungen, Hydrazide, Semicarbazide, N-Nitrosoverbindungen, Benzoxazine u.a. (Kunststoffe 66 (1976), 10, Seiten 698 bis 701) üblicherweise in ein vorgefertigtes Polymer eingearbeitet oder auf das Kunststoffgranulat aufgetrommelt und durch Extrusion verschäumt werden, technisch von untergeordneter Bedeutung blieb, finden die physikalisch wirkenden, niedrigsiedenden Flüssigkeiten, insbesondere Chlorfluoralkane, weltweit in großem Maßstabe zur Herstellung von Polyurethan- oder Polyisocyanurat-Schaumstoffen Verwendung. Nachteilig an diesen Treibgasen ist lediglich die Belastung der Umwelt. Bei der Bildung von Treibgasen durch thermische Spaltung oder chemische Reaktion entstehen hingegen Spaltprodukte und/oder reaktive Nebenprodukte, die in das Polyadditionsprodukt eingelagert oder chemisch gebunden werden und zu einer unerwünschten Veränderung der mechanischen Eigenschaften des Kunststoffes führen können. Im Fall der Bildung von Kohlendioxid aus Wasser und Isocyanat entstehen Harnstoffgruppen im Polyadditionsprodukt, die in Abhängigkeit von ihrer Menge zu einer Verbesserung der Druckfestigkeit bis zur Versprödung des Polyurethans führen können.

Nach Angaben der EP-A-351 614 können als Treibmittel ferner fluorierte Kohlenwasserstoffe, perfluorierte Kohlenwasserstoffe, Schwefelhexafluorid oder Mischungen aus mindestens zwei dieser Verbindungen verwendet werden. Da diese fluorierten oder perfluorierten Treibmittel in den Aufbaukomponenten zur Herstellung der Polyisocyanat-Polyadditionsprodukte schwer- oder unlöslich sind, werden sie in mindestens

einem organischen und/oder modifizierten organischen Polyisocyanat, mindestens einer höhermolekularen Verbindung mit mindestens zwei reaktiven Wasserstoffatomen oder einer Mischung aus mindestens einer höhermolekularen Verbindung mit mindestens zwei reaktiven Wasserstoffatomen und einem niedermolekularen Kettenverlängerungs- und/oder Vernetzungsmittel emulgiert. Nach dieser Methode können zellige Kunststoffe mit gleichmäßiger und feiner Zellstruktur hergestellt werden. Nachteilig an diesem Verfahren ist lediglich die geringe Auswahl an geeigneten fluorierten oder perfluorierten Verbindungen mit einem Siedepunkt in dem erforderlichen Siedepunktsbereich und der hohe Preis für diese Treibmittel. Um zellhaltige Kunststoffe mit der technisch gewünschten Zellstruktur zu erhalten, ist man auf eine eng begrenzte Auswahl von Mischungen aus Perfluorpentan und Perfluorhexan angewiesen.

Als Treibmittel verwendbare niedrigsiedende Kohlenwasserstoffe sind in den Aufbaukomponenten zur Herstellung der Polyisocyanat-Polyadditionsprodukte löslich und ergeben zellige Kunststoffe mit einer gröberen, vielfach uneinheitlichen Zellstruktur und erhöhten Wärmeleitfähigkeit.

Der Mechanismus der Schaumbildung bei der Herstellung von Polyisocyanat-Polyadditionsprodukten und der Einfluß von oberflächenaktiven Hilfsmitteln auf der Grundlage von Siloxan-oxalkylen-copolymeren auf diese Reaktion wurde von B. Kanner et al. (J. of cellular Plastics, January 1969, Seiten 32 bis 39) beschrieben.

Die Aufgabe der vorliegenden Erfindung bestand darin, die als Treibmittel zur Herstellung von zellhaltigen Kunststoffen nach dem Polyisocyanat-Polyadditionsverfahren bekannten Fluorchlorkohlenwasserstoffe ganz oder zumindest teilweise durch andere, umweltfreundliche Treibmittel zu ersetzen, ohne dadurch die feinzellige Schaumstruktur, wie sie mit Emulsionen auf Basis von fluorierten Kohlenwasserstoffen erzielt werden kann, negativ zu beeinflussen. Die Verarbeitbarkeit der Treibmittel enthaltenden Reaktionsmischungen sollte erweitert und ihre Empfindlichkeit hinsichtlich verschiedenartiger Schaumvorrichtungen minimiert werden.

Diese Aufgabe konnte überraschenderweise gelöst werden mit Hilfe von niedrigsiedenden, teilweise oder vollständig fluorierten, tertiären Alkylaminen.

Gegenstand der Erfindung ist somit ein Verfahren zur Herstellung von zellhaltigen Kunststoffen nach dem Polyisocyanat-Polyadditionsverfahren durch Umsetzung von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart von

d) Treibmitteln,

e) Katalysatoren,

f) Hilfsmitteln und/oder Zusatzstoffen,

das dadurch gekennzeichnet ist, daß man als Treibmittel (d) niedrigsiedende, fluorierte und/oder vorzugsweise perfluorierte, tertiäre Alkylamine verwendet.

Nach einer modifizierten Ausführungsform des erfindungsgemäßen Verfahrens können als Treibmittel (d) ferner Mischungen verwendet werden, die enthalten

d1) mindestens ein niedrigsiedendes, fluoriertes und/oder vorzugsweise perfluoriertes, tertiäres Alkylamin und

d2) mindestens ein weiteres, von (d1) verschiedenes, physikalisch wirkendes Treibmittel oder ein chemisch wirkendes Treibmittel oder eine Mischung aus mindestens einem dieser physikalisch und mindestens einem dieser chemisch wirkenden Treibmittel.

Gegenstand der Erfindung sind ferner treibmittelhaltige Emulsionen, die enthalten

i) mindestens ein niedrigsiedendes, in den Aufbaukomponenten (a), (b) oder (c) schwer- oder unlösliches, fluoriertes oder vorzugsweise perfluoriertes, tertiäres Alkylamin mit 3 bis 9 Kohlenstoffatomen und

ii) mindestens ein organisches und/oder modifiziertes, organisches Polyisocyanat (a) oder mindestens eine höhermolekulare Verbindung mit mindestens zwei reaktiven Wasserstoffatomen (b) oder mindestens ein niedermolekulares Kettenverlängerungs- und/oder Vernetzungsmittel (c) oder eine Mischung aus (b) und (c).

Da die erfindungsgemäß verwendbaren, fluorierten oder vorzugsweise perfluorierten, tertiären Alkylamine in den als Treibmittel erforderlichen Mengen üblicherweise in den Aufbaukomponenten zur Herstellung der Polyisocyanat-polyadditionsprodukte schwer- oder unlöslich sind, werden diese zweckmäßigerweise in mindestens einer der Aufbaukomponenten (a), (b) oder (c), vorzugsweise in (b) oder Mischungen aus (b) und (c) emulgiert.

Überraschenderweise zeigte sich, daß derartige Emulsionen einfach herstellbar, relativ stabil und unter den unterschiedlichsten Verarbeitungsbedingungen leicht handhabbar sind und sich durch eine verbesserte

Verarbeitbarkeit auszeichnen. Die erfindungsgemäß hergestellten Polyisocyanat-polyadditionsprodukte besitzen eine gleichmäßige, feinzellige Struktur und gute mechanische Eigenschaften. Insbesondere hervorzuheben ist ihre extrem niedrige Wärmeleitfähigkeit. Vorteilhaft ist ferner, die leichte chemische Abbauarkeit der fluorierten und perfluorierten, tertiären Alkylamine in der Atmosphäre.

Zu den Aufbaukomponenten (a) bis (f), insbesondere den erfindungsgemäß verwendbaren Treibmitteln oder Treibmittelmischungen (d) zur Herstellung der zelligen Polyisocyanat-Polyadditionsprodukte, vorzugsweise der Urethangruppen oder Urethan- und Isocyanuratgruppen enthaltenden Schaumstoffe, ist folgendes auszuführen:

a) Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4-und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000 modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.%, vorzugsweise von 21 bis 14 Gew.%, bezogen auf das Gesamtgewicht, hergestellt aus den nachfolgend beschriebenen Polyester- und/oder vorzugsweise Polyetherpolyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanatoder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.

b) Als höhermolekulare Verbindungen b) mit mindestens zwei reaktiven Wasserstoffatomen werden zweckmäßigerweise solche mit einer Funktionalität von 2 bis 8, vorzugsweise 2 bis 6 und einem Molekulargewicht von 400 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\epsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250 °C, vorzugsweise 180 bis 220 °C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3 und ein Molekulargewicht von 480 bis 3000, vorzugsweise 1200 bis 3000 und insbesondere 1800 bis 2500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und

dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 400 bis 8000, vorzugsweise 1200 bis 6000 und insbesondere 1800 bis 4000 und geeignete Polyoxytetramethylen-glykole ein Molekulargewicht bis ungefähr 3500.

Als Polyether-polyole eignen sich ferner polymermodifizierte Polyether-polyole, vorzugsweise Pfropfpolyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).

c) Die Polyisocyanat-Polyadditionsprodukte, und vorzugsweise Urethan- oder Urethan- und Isocyanuratgruppen enthaltende Schaumstoffe, können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise Dialkylenglykole und aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Zur Herstellung zelliger Polyurethan-Polyharnstoff-Elastomerer können neben den obengenannten

Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3', 5,5'-tetraalkylsubstituierte Diamino-diphenylmethane Anwendung finden.

Als sek. aromatische Diamine seine beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p-bzw. -m-Phenylendiamin, N,N'-Dimethyl-, N,N'-Diethyl-, N,N'-Diisopropyl-, N,N'-Di-sek-butyl-, N,N'-Dicyclohexyl-4,4'-diaminodiphenylmethan und N,N'-Di-sek-butyl-benzidin.

Als aromatische Diamine werden zweckmäßigerweise solche verwendet, die in ortho-Stellung zu den Aminogruppen mindestens einen Alkylsubstituenten besitzen, bei Raumtemperatur flüssig und mit der Komponente (b), insbesondere den Polyether-polyolen, mischbar sind. Bewährt haben sich ferner alkylsubstituierte meta-Phenylendiamine der Formeln

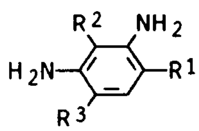

und/oder

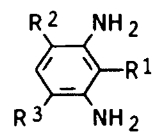

in den $R^3$ und $R^2$ gleich oder verschieden sind und einen Methyl, Ethyl-, Propyl- und Isopropylrest bedeuten und $R^1$ ein linearer oder verzweigter Alkylrest mit 1 bis 10, vorzugsweise 4 bis 6 Kohlenstoffatomen ist.

Insbesondere bewährt haben sich solche Alkylreste $R^1$, bei denen die Verzweigungsstelle am $C^1$-Kohlenstoffatom sitzt. Als Reste $R^1$ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4- bzw. -2,6-phenylendiamine, 2,4-Dimethyl-6-tert.butyl-, 2,4-Dimethyl-6-isooctyl-und 2,4-Dimethyl-6-cyclohexyl-m-phenylendiamin-1,3.

Geeignete 3,3'-di- und 3,3',5,5'-tetra-n-alkylsubstituierte 4,4'-Diaminodiphenylmethane sind beispielsweise 3,3'-Di-, 3,3',5,5'-Tetramethyl-, 3,3'-Di-, 3,3',5,5'-Tetraethyl-, 3,3'-Di-, und 3,3',5,5'-Tetra-n-propyl-4,4'-diaminodiphenylmethan.

Vorzugsweise verwendet werden Diamino-diphenylmethane der Formel

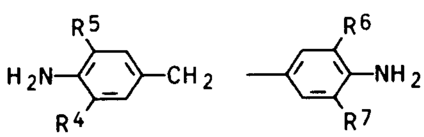

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln

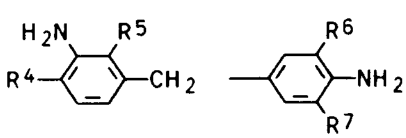

und/oder

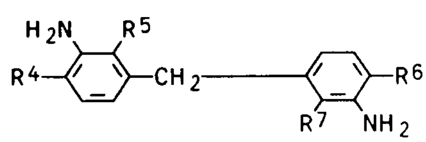

verwendet werden, wobei $R^4$, $R^5$, $R^6$ und $R^7$ die obengenannte Bedeutung haben.

Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.

Die genannten Kettenverlängerungsmittel und/oder Vernetzungsmittel (c) können einzeln oder als Mischungen von gleichen oder verschiedenen Verbindungsarten verwendet werden.

Sofern Kettenverlängerungsmittel, Vernetzungsmittel oder Mischungen davon Anwendung finden, kommen diese zweckmäßigerweise in Mengen von 2 bis 60 Gew.%, vorzugsweise 8 bis 50 Gew.% und insbesondere 10 bis 40 Gew.%, bezogen auf das Gewicht der Komponenten (b) und (c) zum Einsatz.

d) Erfindungsgemäß finden als Treibmittel (d) niedrigsiedende, fluorierte oder vorzugsweise perfluorierte, tertiäre Alkylamine (d1) oder deren Gemische Verwendung. Als fluorierte, tertiäre Alkylamine werden vorteilhafterweise solche verwendet, die überwiegend, das heißt zu mindestens 50 %, vorzugsweise zu mindestens 80 % und insbesondere zu mindestens 90 % fluoriert sind und zweckmäßigerweise mindestens ein, vorzugsweise ein Wasserstoffatom gebunden haben. Wie bereits ausgeführt wurde, sind derartige fluorierte oder perfluorierte, tertiäre Alkylamine in den zur Bildung von vorzugsweise Urethan- oder Urethan- und Isocyanuratgruppen enthaltenden Schaumstoffen erforderlichen Mengen in den Aufbaukomponenten (a), (b) oder (c) oder Mischungen aus (b) und (c) schwer- oder unlöslich, so daß sie in mindestens einer dieser Aufbaukomponenten (a), (b) oder (c), vorzugsweise in (b) oder einer Mischung aus (b) und (c) oder der flüssigen Reaktionsmischung, bestehend aus (a), (b), (d) bis (f) und gegebenenfalls (c), emulgiert werden. Als Treibmittel vorzüglich bewährt haben sich die bei Raumtemperatur flüssigen, fluorierten oder perfluorierten tertiären Alkylamine mit 3 bis 9, vorzugsweise 4 bis 6 Kohlenstoffatomen, wobei insbesondere bevorzugt die perfluorierten, tertiären Alkylamine sind.

Als geeignete (per)fluorierte, tertiäre Alkylamine seien beispielhaft genannt: Perfluor-dimethyl-ethylamin, Perfluor-diethyl-methylamin, Perfluor-trimethylamin, Perfluor-triethylamin, Perfluor-dimethyl-n-propylamin, Perfluor-diethyl-n-propylamin, Perfluor-tri-n-propylamin und Perfluor-dimethyl-isopropylamin sowie die entsprechenden partiell fluorierten tertiären Alkylamine. Die fluorierten und/oder vorzugsweise perfluorierten, tertiären Amine können einzeln oder in Form von Mischungen eingesetzt werden. Vorzugsweise Anwendung findet als Treibmittel (d) Perfluor-dimethyl-isopropylamin.

Als Treibmittel (d) können zur Herstellung der zellhaltigen Kunststoffe nach dem erfindungsgemäßen Verfahren auch Mischungen verwendet werden, die enthalten oder vorzugsweise bestehen aus

d1) mindestens einem niedrigsiedenden, fluorierten oder vorzugsweise perfluorierten, tertiären Alkylamin oder Mischungen davon und

d2) mindestens einem weiteren, von (d1) verschiedenen, physikalisch wirkenden Treibmittel oder einem chemisch wirkenden Treibmittel oder einer Mischung aus einem derartigen physikalisch und einem chemisch wirkenden Treibmittel.

Als von (d1) verschiedene, physikalisch wirkende Treibmittel kommen beispielsweise in Betracht:
Alkane mit 4 bis 12 Kohlenstoffatomen, vorzugsweise 5 oder 6 Kohlenstoffatomen,
Cycloalkane mit 4 bis 6 Kohlenstoffatomen, vorzugsweise 5 oder 6 Kohlenstoffatomen,
lineare und cyclische, gesättigte oder olefinisch ungesättigte Ether mit 2 bis 5 Kohlenstoffatomen,
aliphatische Carbonsäureester mit einem Siedepunkt von maximal 142°C, vorzugsweise von unter 80°C,
aliphatische und/oder cycloaliphatische Ketone mit 3 bis 5 Kohlenstoffatomen,
teilhalogenierte Fluorchlorkohlenwasserstoffe mit 1 oder 2 Kohlenstoffatomen,
perfluorierte, lineare oder cyclische Ether mit 4 bis 12 Kohlenstoffatomen, vorzugsweise 4 bis 6 Kohlenstoffatomen und
vorzugsweise fluorierte oder perfluorierte, vorteilhafterweise aliphatische oder cycloaliphatische, Kohlenwasserstoffe mit 3 bis 8 Kohlenstoffatomen, wobei insbesondere verwendet werden bei Raumtemperatur flüssige, aliphatische oder cycloaliphatische, fluorierte Kohlenwasserstoffe mit 3 bis 6 Kohlenstoffatomen, die mindestens ein Wasserstoffatom gebunden enthalten und aliphatische oder cycloaliphatische, perfluorierte Kohlenwasserstoffe mit 4 bis 7 Kohlenstoffatomen.

Als physikalisch wirkende Treibmittel (d2) der genannten Art seien beispielhaft genannt: Gasförmige oder vorzugsweise flüssige, lineare oder verzweigte Alkane, wie z.B. Butan, n-, iso-Pentan sowie die technischen Pentangemische, n- und iso-Hexane, n- und iso-Heptane, n- und iso-Octane, n- und iso-Nonane, n- und iso-Decane, n- und iso-Undecane und n- und iso-Dodecane. Da sehr gute Ergebnisse hinsichtlich der Stabilität der Emulsionen, der Verarbeitbarkeit der Reaktionsmischung und den mechanischen Eigenschaften der hergestellten zellhaltigen Polyisocyanat-Polyadditionsprodukte erzielt werden bei Verwendung von n-Pentan, iso-Pentan und n-Hexan oder Mischungen davon, werden diese Alkane bevorzugt eingesetzt. Beispielhaft genannt seien ferner als Cycloalkane z.B. Cyclobutan, vorzugsweise Cyclopentan, Cyclohexan oder Mischungen davon, als lineare oder cyclische Ether, z.B. Dimethylether, Diethylether, Methylethylether, Vinylmethylether, Vinylethylether, Divinylether, Tetrahydrofuran und Furan, als aliphatische Carbonsäureester z.B. Methyl-, Ethyl-, n-Propyl-, iso-Propyl- und Butylacetat und vorzugsweise Methyl- und Ethylformiat, als Ketone z.B. Aceton, Methylethylketon und Cyclopentanon, als teilhalogenierte Fluorchlorkohlenwasserstoffe, z.B. Difluor-monochlormethan (R 22), 1,1,1-Trifluor-2,2-dichlorethan (R 123) und 1,1,1-Dichlormonofluorethan (R 141b), als perfluorierte, lineare oder cyclische Ether, z.B. Perfluordiethyl-, Perfluordipropyl- und Perfluorethylpropylether, Oligomere des Perfluorpropylenoxids mit einem Siedepunkt von maximal 135°C, Perfluortetrahydrofuran, Perfluoralkyltetrahydrofurane und Perfluorfuran. Gut geeignet sind auch bei Raumtemperatur gasförmige, aliphatische oder cycloaliphatische, fluorierte oder perfluorierte Kohlenwasserstoffe, wie z.B. Perfluorpropan, Perfluorbutan oder Perfluorcyclobutan, die unter Druck, z.B. bei einem Druck von bis zu ungefähr 25 bar verflüssigt, gemischt und emulgiert werden können.

Als physikalisch wirkende Treibmittel (d2) vorzüglich bewährt haben sich jedoch und daher vorzugsweise verwendet werden bei Raumtemperatur flüssige, aliphatische oder cycloaliphatische, fluorierte oder perfluorierte Kohlenwasserstoffe. Als fluorierte Kohlenwasserstoffe werden zweckmäßigerweise solche verwendet, die überwiegend, beispielsweise zu mindestens 85 % fluoriert sind und mindestens ein, vorzugsweise ein Wasserstoffatom gebunden haben. Geeignete fluorierte Kohlenwasserstoffe sind beispielsweise Trifluormethan, Difluormethan, Difluorethan, Tetrafluorethan und vorzugsweise Hexafluorpropan, Heptafluorpropan, 1-H-Perfluorbutan und 1-H-Perfluorhexan. Als perfluorierte Kohlenwasserstoffe kommen beispielsweise in Betracht: Perfluorpentan, Perfluorhexan, Perfluorheptan, Perfluoroctan, Perfluorcyclopentan und Perfluorcyclohexan. Die fluorierten oder perfluorierten Kohlenwasserstoffe oder Mischungen davon können ebenso wie die anderen geeigneten physikalisch wirkenden Treibmittel einzeln oder in Form von Gemischen verwendet werden. Verwendbar sind ferner Mischungen aus den unterschiedlichen physikalisch wirkenden Treibmitteln.

Die erfindungsgemäß verwendbaren Treibmittelmischungen (d) enthalten die niedrigsiedenden, fluorierten und/oder perfluorierten, tertiären Alkylamine (d1) und die von (d1) verschiedenen, weiteren physikalisch wirkenden Treibmittel (d2), vorzugsweise die fluorierten und/oder perfluorierten Kohlenwasserstoffe, vorteilhafterweise in einem Gewichtsverhältnis von 90:10 bis 10:90, vorzugsweise von 80:20 bis 60:40. Sofern die physikalisch wirkenden Treibmittel in den erforderlichen Mengen in den Aufbaukomponenten (a), (b) oder (c) unlöslich sind, werden sie zweckmäßigerweise gemeinsam mit den niedrigsiedenden, fluorierten und/oder perfluorierten tertiären Alkylaminen in mindestens einer dieser Aufbaukomponenten emulgiert.

Zusätzlich zu den erfindungsgemäß als Treibmittel verwendbaren niedrigsiedenden, fluorierten und/oder perfluorierten, tertiären Alkylaminen (d1) oder Mischungen aus (d1) und den von (d1) verschiedenen, anderen physikalisch wirkenden Treibmitteln, oder anstelle der von (d1) verschiedenen physikalisch wirkenden Treibmittel, können auch chemisch wirkende Treibmittel Verwendung finden. Als chemisch wirkendes Treibmittel hat sich insbesondere Wasser bewährt, das mit den organischen, gegebenenfalls modifizierten Polyisocyanaten (a) unter Bildung von Kohlendioxid, dem eigentlichen Treibmittel, und Harnstoffgruppen reagiert und dadurch die Druckfestigkeit der Endprodukte beeinflußt. Als chemisch wirkende Treibmittel kommen ferner organische Mono- und Polycarbonsäuren mit einem Molekulargewicht von 60 bis 300 und vorzugsweise Ameisensäure sowie Ammonium- und/oder Aminsalze der Ameisensäure und/oder der oben genannten Mono- und/oder Polycarbonsäuren in Betracht, sofern diese unter den Reaktionsbedingungen mit Isocyanaten reagieren und Kohlendioxid bilden.

Als organische Carbonsäuren finden vorteilhafterweise aliphatische Mono- und Polycarbonsäuren, z.B. Dicarbonsäuren, Verwendung. Geeignet sind jedoch andere organische Mono- und Polycarbonsäuren. Die organischen Carbonsäuren können gegebenenfalls auch unter den Reaktionsbedingungen der Polyisocyanat-Polyaddition inerte oder mit Isocyanaten reaktionsfähige Substituenten gebunden enthalten und/oder olefinisch ungesättigte Gruppen aufweisen. Als chemisch inerte Substituenten seien beispielsweise Halogenatome, wie z.B. Fluor- und/oder Chloratome, und Alkylreste, wie z.B. Methyl- oder Ethylreste, genannt. Zweckmäßigerweise besitzen die substituierten organischen Carbonsäuren mindestens eine weitere gegenüber Isocyanaten reaktionsfähige Gruppe, wie z.B. eine Mercaptogruppe, primäre und/oder sekundäre Aminogruppen und vorzugsweise primäre und/oder sekundäre Hydroxylgruppen.

In Betracht kommen somit gegebenenfalls substituierte Monocarbonsäuren wie z.B. Essigsäure, Propionsäure, 2-Chlorpropionsäure, 3-Chlorpropionsäure, 2,2-Dichlorpropionsäure, Hexansäure, 2-Ethylhexansäure, Cyclohexancarbonsäure, Dodecansäure, Palmitinsäure, Stearinsäure, Ölsäure, 3-Mercaptopropionsäure, Glycolsäure, 3-Hydroxypropionsäure, Milchsäure, Ricinolsäure, 2-Aminopropionsäure, Benzoesäure, 4-Methylbenzoesäure, Salicylsäure und Antranilsäure und gegebenenfalls substituierte Polycarbonsäuren, vorzugsweise Dicarbonsäuren wie z.B. Oxalsäure, Malonsäure, Bernsteinsäure, Fumarsäure, Maleinsäure, Glutarsäure, Adipinsäure, Sebacinsäure, Dodecandisäure, Weinsäure, Phthalsäure, Isophthalsäure und Zitronensäure.

Zur Bildung der Aminsalze werden üblicherweise schwach basische Amine wie z.B. Triethylamin, Dimethyl-benzylamin oder Hydrazin verwendet.

Da die in den Polyester- und Polyether-polyolen als Nebenprodukt enthaltene Wassermenge vielfach ausreicht, bedarf es oft keiner zusätzlichen Zugabe eines chemisch wirkenden Treibmittels. Vorzugsweise wird jedoch der Polyurethan-Formulierung zusätzlich Wasser einverleibt, üblicherweise in einer Menge von 0,05 bis 5 Gew.-%, vorzugsweise von 0,5 bis 4 Gew.-%, bezogen auf das Gewicht der Aufbaukomponenten (a) bis (c).

Geeignete Treimittelmischungen (d) enthalten somit, bezogen auf das Gesamtgewicht von (d1) und (d2) zweckmäßigerweise

d1) mindestens 30 Gew.-%, vorzugsweise mindestens 60 Gew.-%, mindestens eines niedrigsiedenden, fluorierten und/oder perfluorierten tertiären Alkylamins und

d2) maximal 70 Gew.-%, vorzugsweise weniger als 40 Gew.-% mindestens eines weiteren, von (d1) verschiedenen, physikalisch wirkenden und/oder chemisch wirkenden Treibmittels.

Die zweckmäßigste Menge an niedrigsiedenden, fluorierten oder vorzugsweise perfluorierten tertiären Alkylaminen (d1) als Treibmittel zur Herstellung der zelligen Polyisocyanat-Polyadditionsprodukte hängt ab von der Dichte, die man erreichen will und der gegebenenfalls eingesetzten Menge an Wasser, als dem bevorzugt verwandten chemisch wirkenden Treibmittel. Die erforderlichen Treibmittelmengen können experimentell auf einfache Weise ermittelt werden. Im allgemeinen liefern Mengen von 1 bis 40 Gew.-Teilen, vorzugsweise von 1 bis 15 Gew.-Teilen und insbesondere 3 bis 10 Gew.-Teilen der (per)-fluorierten, tertiären Alkylamine (d1) oder vorzugsweise der Treibmittelmischungen, bestehend aus (d1) und (d2), bezogen auf 100 Gew.-Teile der Aufbaukomponenten (a) bis (c) oder (a) und (b) zufriedenstellende Ergebnisse.

Die erfindungsgemäß als Treibmittel geeigneten (per)fluorierten, tertiären Alkylamine (d1) oder Mischungen aus (d1) und (d2) werden zur Verarbeitung vorzugsweise in den Aufbaukomponenten (a), (b) oder Mischungen aus (b) und (c) oder in (a) und (b) emulgiert, wobei sich die löslichen physikalisch oder chemisch wirkenden Treibmittel (d2) der Treibmittelmischung (d) in den Aufbaukomponenten homogen lösen.

Zur Erzielung derartiger treibmittelhaltiger Emulsionen eignen sich die aus der Polyurethanchemie bekannten Emulgatoren. Als Emulgatoren insbesondere eingesetzt werden oligomere Acrylate, die als Seitengruppen Polyoxyalkylen- und Fluoralkanreste gebunden enthalten und einen Fluorgehalt von ungefähr 5 bis 30 Gew.-% aufweisen. Oligomere Acrylate dieser Art sind aus der Kunststoffchemie, z.B. als Haftvermittler in verstärkten Kunststoffen, hinreichend bekannt, so daß sich nähere Ausführungen erübrigen. Ihre Struktur und Verfahren zu ihrer Herstellung, sowie geeignete fluoraliphatische Reste und aktiven Wasserstoff enthaltende Vorläufer, die zur Herstellung der beschriebenen Oligomeren verwendet werden können, werden z.B. ausführlich beschrieben in der DE-B-23 10 357 und der hierzu äquivalenten US-Patentschrift Nr. 3 787 351 sowie den dort genannten Literatur- und Patentpublikationen und der DE-A-38 24 355. Die Ausführungen dieser Publikationen, insbesondere der US 3 787 351, werden in vollem Umfange in die Anmeldebeschreibung incorporiert und als Bestandteil der Anmeldebeschreibung angesehen.

Die z.B. als Emulgator geeigneten oligomeren Acrylate mit Polyoxyalkylen- und Fluoralkanresten als Seitengruppen werden zweckmäßigerweise in einer Menge von 0,01 bis 6 Gew.-Teilen, vorzugsweise 0,2 bis 3,5 Gew.-Teilen und insbesondere 0,5 bis 2,0 Gew.-Teilen, bezogen auf 100 Gew.-Teile der Aufbaukomponenten (a), (b) oder der Mischung aus (b) und (c) eingesetzt.

Zur Emulgierung der (per)fluorierten tertiären Alkylamine (d1) oder Treibmittelmischung aus (d1) und (d2) eignen sich, wie bereits ausgeführt wurde, die organischen und/oder modifizierten organischen Polyisocyanate (a), die höhermolekularen Verbindungen mit mindestens zwei reaktiven Wasserstoffatomen (b) und die niedermolekularen Kettenverlängerungs- und/oder Vernetzungsmittel (c). Geeignet sind ferner Mischungen aus (b) und niedermolekularen Kettenverlängerungs- und/oder Vernetzungsmitteln (c).

Bei Verwendung von organischen und/oder modifizierten organischen Polyisocyanaten (a) als andere Emulsionsphase finden vorzugsweise aromatische Polyisocyanate, ausgewählt aus der Gruppe 2,4-, 2,6-Toluylen-diisocyanat oder Mischungen der genannten Isomeren, 4,4'-, 2,4'- und 2,2'-Diphenylmethan-diisocyanat oder Mischungen aus mindestens zwei der genannten Isomeren und Mischungen aus Diphenylmethan-diisocyanaten und Polyphenyl-polymethylen-polyisocyanaten, Anwendung. Sofern die organischen Polyisocyanate bei Raumtemperatur kristallin sind, werden sie durch Mischen mit flüssigen Polyisocyanaten und/oder durch geeignete partielle Modifizierung, wie z.B. Carbodiimidisierung und/oder Urethanisierung, verflüssigt.

Als andere Emulsionsphase finden jedoch vorzugsweise die höhermolekularen Verbindungen mit

mindestens zwei reaktiven Wasserstoffatomen Verwendung. Insbesondere geeignet sind Polyesterpolyole oder deren Gemische mit einer Funktionalität von 2 bis 3 und einem Molekulargewicht von 480 bis 3000 und Polyether-polyole oder deren Gemische mit einer Funktionalität von 2 bis 6 und einem Molekulargewicht von 400 bis 8000, wobei diese zweckmäßigerweise ausgewählt sind aus der Gruppe der Polyoxyethylen-, Polyoxypropylen-, Polyoxypropylen-polyoxyethylenpolyole und Polyoxytetramethylen-glykole oder Mischungen davon.

Die erfindungsgemäßen treibmittelhaltigen Emulsionen enthalten somit oder bestehen vorzugsweise aus

i) mindestens einem niedrigsiedenden, in den Aufbaukomponenten (a), (b) oder (c) schwer- oder unlöslichen, fluorierten oder vorzugsweise perfluorierten, tertiären Alkylamin mit 3 bis 9 Kohlenstoffatomen oder Mischungen davon und

ii) mindestens einem organischen und/oder modifizierten organischen Polyisocyanat (a) oder mindestens einer höhermolekularen Verbindung mit mindestens zwei reaktiven Wasserstoffatomen (b) oder mindestens einem niedermolekularen Kettenverlängerungs- und/oder Vernetzungsmittel (c) oder einer Mischung aus (b) und (c).

Als treibmittelhaltige Emulsionen insbesondere bewährt haben sich solche, die bestehen aus

i) 1 bis 40 Gew.-Teilen, vorzugsweise 1 bis 15 Gew.-Teilen, und insbesondere 3 bis 10 Gew.-Teilen pro 100 Gew.-Teilen (a), (b) oder (b) und (c) mindestens eines niedrigsiedenden, in den Aufbaukomponenten (a), (b) oder (c) schwer- oder unlöslichen, fluorierten oder vorzugsweise perfluorierten, tertiären Alkylamins mit 3 bis 9 Kohlenstoffatomen, vorzugsweise 4 bis 6 Kohlenstoffatomen (d1) oder einer Treibmittelmischung (d), die ihrerseits besteht aus (d1) und mindestens einem, von (d1) verschiedenen, niedrigsiedenden, in (a) bis (c) schwer- oder unlöslichen, physikalisch wirkenden Treibmittel (d2), vorzugsweise einem fluorierten und/oder perfluorierten Kohlenwasserstoff mit 3 bis 8 Kohlenstoffatomen oder insbesondere mindestens einem partiell fluorierten Kohlenwasserstoff mit 3 bis 6 Kohlenstoffatomen oder mindestens einem perfluorierten Kohlenwasserstoff mit 4 bis 7 Kohlenstoffatomen

und

ii) mindestens einem organischen und/oder modifizierten organischen Polyisocyanat (a) oder mindestens einer höhermolekularen Verbindung mit mindestens zwei reaktiven Wasserstoffatomen (b) oder mindestens einem niedermolekularen Kettenverlängerungs- und/oder Vernetzungsmittel (c) oder einer Mischung aus (b) und (c).

Zur Herstellung der lagerstabilen, treibmittelhaltigen Emulsionen werden die Aufbaukomponenten (a) oder (b) oder (c) bzw. Mischungen aus (b) und (c) und das (per)fluorierte, tertiäre Alkylamin (d1) oder die Treibmittelmischung aus (d1) und (d2) zweckmäßigerweise in Gegenwart eines Emulgators, vorzugsweise eines oligomeren Acrylats bei Temperaturen von 0 bis 70 ° C, vorzugsweise von 20 bis 40 ° C intensiv vermischt. Als geeignete Mischaggregate hierfür seien beispielhaft genannt: statische Mischer, wie z.B. SMX der Firma Sulzer (Schweiz) oder dynamische Mischer, wie z.B. Propellerrührer oder Ultra-Turrax® der Firma Hanke und Kunkel (BRD).

e) Als Katalysatoren (e) zur Herstellung der zelligen Kunststoffe nach dem Polyisocyanat-Polyadditionsverfahren werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethyl-hexandiamin-1,6, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere

0,05 bis 2 Gew.-% Katalysator bzw. Katalysatorkombination bezogen auf das Gewicht der Komponente (b).

f) Der Reaktionsmischung zur Herstellung der zelligen Kunststoffe nach dem Polyisocyanat-Polyadditionsverfahren können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend- wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Ruß, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 Gew.% erreichen kann.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat (Exolit®) und Calciumsulfat, Blähgraphit oder Cyanursäurederivate, wie z.B. Melamin oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der zelligen Harnstoff- und/oder vorzugsweise Urethangruppen enthaltenden Kunststoffe werden die organischen Polyisocyanate (a), höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenz-Verhältnis von NCO-Gruppen der

Polyisocyanate (a) zur Summe der reaktiven Wasserstoffatome der Komponenten (b) und gegebenenfalls (c) 1:0,85 bis 1,25, vorzugsweise 1:0,95 bis 1,15 beträgt. Falls die zelligen Kunststoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1 angewandt.

Die zellhaltigen Kunststoffe aus Polyisocyanat-polyadditionsprodukten, vorzugsweise zelligen Elastomeren oder insbesondere Schaumstoffe werden vorteilhafterweise nach dem one shot-Verfahren, beispielsweise mit Hilfe der Reaktionsspritzguß-, Hochdruck- oder Niederdruck-Technik in offenen oder geschlossenen Formwerkzeugen, beispielsweise metallischen Formwerkzeugen hergestellt. Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90 °C, vorzugsweise von 20 bis 35 °C gemischt und in das offene oder gegebenenfalls unter erhöhtem Druck in das geschlossene Formwerkzeug eingebracht. Die Vermischung kann, wie bereits dargelegt wurde, mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 110 °C, vorzugsweise 30 bis 60 °C und insbesondere 45 bis 50 °C.

Die nach dem erfindungsgemäßen Verfahren hergestellten zelligen Elastomeren besitzen Dichten von ungefähr 0,76 bis 1,0 $g/cm^3$, vorzugsweise von 0,9 bis 1,0 $g/cm^3$, wobei die Dichte von füllstoffhaltigen Produkten höhere Werte, z.B. bis 1,4 $g/cm^3$ und mehr erreichen kann. Formkörper aus derartigen zelligen Elastomeren finden Verwendung in der Automobilindustrie, beispielsweise als Kopfstützen, Außenteile, wie z.B. Heckspoiler und Stoßfänger und Innenauskleidungen sowie als Schuhsohlen.

Die nach dem erfindungsgemäßen Verfahren hergestellten weichelastischen, halbharten und harten Schaumstoffe sowie die entsprechenden Integralschaumstoffe weisen eine Dichte von 0,02 bis 0,75 $g/cm^3$ auf, wobei die Dichte der Schaumstoffe vorzugsweise 0,025 bis 0,24 $g/cm^3$ und insbesondere 0,03 bis 0,1 $g/cm^3$ und die Dichte der Integralschaumstoffe vorzugsweise 0,08 bis 0,75 $g/cm^3$, und insbesondere 0,24 bis 0,6 $g/cm^3$ betragen. Die Schaumstoffe und Integralschaumstoffe werden z.B. verwendet in der Fahrzeug-, z.B. Automobil-, Flugzeug- und Schiffbauindustrie, der Möbel und Sportartikelindustrie als beispielsweise Polstermaterialien, Gehäuseteile, Skiinnenschuh, Skikern u.a. Besonders eignen sie sich als Isolationsmaterial im Bau- und Kühlschranksektor, z.B. als Zwischenschicht für Sandwichelemente oder zum Ausschäumen von Kühlschrank- und Kühltruhengehäusen.

Die erfindungsgemäßen lagerstabilen, treibmittelhaltigen Emulsionen finden insbesondere Verwendung zur Herstellung von Urethan- oder Urethan- und Isocyanuratgruppen enthaltenden Schaumstoffen und Urethan- und/oder Harnstoffgruppen enthaltenden zelligen Elastomeren nach dem Polyisocyanat-Polyadditionsverfahren.

Beispiel 1

a) Herstellung einer treibmittelhaltigen Emulsion:

Zu einer Mischung aus

| | |
|---|---|
| 83 Gew.-Teilen | eines Polyether-polyols mit einer Hydroxylzahl 400, hergestellt aus Sucrose als Startermolekül und 1,2-Propylenoxid, |
| 10 Gew.-Teilen | eines Polyether-diols mit einer Hydroxylzahl 105, hergestellt aus Propandiol-1,2 und 1,2-Propylenoxid, |
| 2 Gew.-Teilen | Polysiloxan-Schaumstabilisator (Tegostab® B 8406 der Firma Goldschmidt AG, Essen), |
| 2 Gew.-Teilen | N,N-Dimethylcyclohexylamin und |
| 3 Gew.-Teilen | Wasser |

wurden unter intensivem Rühren

| | |
|---|---|
| 18 Gew.-Teile | Perfluor-dimethyl-isopropylamin gegeben. |

Es entstand eine milchigweiße Emulsion der Perfluorverbindung in der wasserhaltigen Polyether-polyolmischung.

b) Herstellung eines Polyurethan-Hartschaumstoffs

Zu 100 Gew.-Teilen der nach 1a hergestellten Emulsion wurden bei 23°C unter intensivem Rühren 123 Gew.-Teile einer Mischung aus Diphenylmethan-diisocyanaten und Polyphenyl-polymethylen-polyisocyanaten mit einem NCO-Gehalt von 31 Gew.-% (Lupranat® M 20S der BASF AG) gegeben, die schaumfähige Reaktionsmischung wurde in ein offenes Formwerkzeug eingefüllt und dort aufschäumen gelassen.

Man erhielt einen sehr feinzelligen Polyurethan-Hartschaumstoff mit einem mittleren Porendurchmesser von 145 µm und einer Dichte von 33 g/l. Der Anteil an geschlossenen Zellen betrug 93 % und die Wärmeleitfähigkeit 17 mW/mK.

Vergleichsbeispiel

Man verfuhr analog den Angaben des Beispiels 1, verwendete jedoch anstelle des Perfluor-dimethyl-isopropylamins dieselbe Menge des FCKW's Monofluortrichlormethan.

Man erhielt einen gröberzelligen Polyurethan-Hartschaumstoff mit einem Zelldurchmesser von etwa 420 µm und einer Wärmeleitfähigkeit von 19,5 mW/m°K.

Beispiel 2

a) Herstellung einer treibmittelhaltigen Emulsion:

Zu einer Mischung aus

| | |
|---|---|
| 82,5 Gew.-Teilen | eines Polyether-polyols mit einer Hydroxylzahl 400, hergestellt aus Sucrose als Startermolekül und 1,2-Propylenoxid, |
| 10 Gew.-Teilen | eines Polyether-diols mit einer Hydroxylzahl 105, herge stellt aus Propandiol-1,2 und 1,2-Propylenoxid, |
| 2 Gew.-Teilen | N,N-Dimethylcyclohexylamin, |
| 2,5 Gew.-Teilen | Polysiloxan-Schaumstabilisator (Tegostab® B 8406 der Firma Goldschmidt AG, Essen) und |
| 3 Gew.-Teilen | Wasser |

wurden unter intensivem Rühren eine Mischung aus

| | |
|---|---|
| 9 Gew.-Teilen | Perfluor-dimethyl-isopropylamin und |
| 9,5 Gew.-Teilen | Perflorhexan gegeben. |

Es entstand eine milchigweiße Emulsion des Perfluor-dimethyl-isopropylamins und Perfluorhexans in der wasserhaltigen Polyether-polyolmischung.

b) Herstellung eines Polyurethan-Hartschaumstoffs

Zu 100 Gew.-Teilen der nach 2a hergestellten Emulsion wurden bei 23°C unter intensivem Rühren 145 Gew.-Teile einer Mischung aus Diphenylmethandiisocyanaten und Polyphenyl-polymethylen-polyisocyanaten mit einem NCO-Gehalt von 31 Gew.-% (Lupranat® M 20S der BASF AG) gegeben, die Mischung wurde in ein offenes Formwerkzeug eingefüllt und aufschäumen gelassen.

Man erhielt einen feinzelligen Polyurethan-Hartschaumstoff mit einem mittleren Porendurchmesser von 130 µm und einer Dichte von 38 g/l. Der Anteil an geschlossenen Zellen betrug 91 % und die Wärmeleitfähigkeit 18,1 mW/mK.

Beispiel 3

a) Herstellung einer treibmittelhaltigen Emulsion

Man verfuhr analog den Angaben des Beispiels 2, verwendete jedoch eine Treibmittelmischung, die bestand aus

| | |
|---|---|
| 9 Gew.-Teilen<br>2,4 Gew.-Teilen | Perfluor-methyl-diethylamin und<br>n-Hexan. |

Es entstand eine Emulsion des Perfluor-methyl-diethylamins und n-Hexans in der wasserhaltigen Polyolmischung.

b) Herstellung eines Polyurethan-Hartschaumstoffs

Zu 100 Gew.-Teilen der nach 3a hergestellten Emulsion wurden bei 23 ° C unter intensivem Rühren 154 Gew.-Teile einer Mischung aus Diphenylmethan-diisocyanaten und Polyphenyl-polymethylen-polyisocyanaten mit einem NCO-Gehalt von 31 Gew.-% (Lupranat® M 20S) gegeben. Die Reaktionsmischung wurde in ein offenes Formwerkzeug eingefüllt und aufschäumen gelassen.

Man erhielt einen feinzelligen Polyurethan-Hartschaumstoff mit einem mittleren Porendurchmesser von 163 µm und einer Dichte von 35,8 g/l. Der Anteil an geschlossenen Zellen betrug 93 % und die Wärmeleitfähigkeit 18,8 mW/m ° K.

Beispiel 4

a) Herstellung einer treibmittelhaltigen Emulsion

Man verfuhr analog den Angaben des Beispiels 2, verwendete jedoch eine Treibmittelmischung, die bestand aus

| | |
|---|---|
| 9 Gew.-Teilen<br>9 Gew.-Teilen | Perfluor-methyl-diethylamin und<br>1H-Perfluorhexan |

Es entstand eine Emulsion des Perfluor-methyl-diethylamins und 1H-Perfluorhexans in der wasserhaltigen Polyolmischung.

b) Herstellung eines Polyurethan-Hartschaumstoffs

Zu 100 Gew.-Teilen der nach 4a hergestellten Emulsion wurden bei 23 ° C unter intensivem Rühren 144 Gew.-Teile einer Mischung aus Diphenylmethan-diisocyanaten und Polyphenyl-polymethylen-polyisocyanaten mit einem NCO-Gehalt von 31 Gew.-% (Lupranat® M 20S) gegeben. Die Reaktionsmischung wurde in ein offenes Formwerkzeug eingefüllt und aufschäumen gelassen.

Man erhielt einen feinzelligen Polyurethan-Hartschaumstoff mit einem mittleren Porendurchmesser von 400 µm und einer Dichte von 36,1 g/l. Der Anteil an geschlossenen Zellen betrug 93 % und die Wärmeleitfähigkeit 20,8 mW/m ° K.

**Patentansprüche**

**1.** Verfahren zur Herstellung von zellhaltigen Kunststoffen nach dem Polyisocyanat-Polyadditionsverfahren durch Umsetzung von
   a) organischen und/oder modifizierten organischen Polyisocyanaten mit
   b) mindestens einer höhermolekularen Verbindung mit mindestens zwei reaktiven Wasserstoffatomen und gegebenenfalls
   c) niedermolekularen Kettenverlängerungs- und/oder Vernetzungsmitteln

   in Gegenwart von
   d) Treibmitteln,

e) Katalysatoren,

f) Hilfsmitteln und/oder Zusatzstoffen,

dadurch gekennzeichnet, daß man als Treibmittel (d) niedrigsiedende, fluorierte und/oder perfluorierte, tertiäre Alkylamine verwendet.

**2.** Verfahren nach Anspruch 1, dadurch gekennzeichnet, daß man als Treibmittel (d) niedrigsiedende, in (a) bis (c) schwer- oder unlösliche, fluorierte oder perfluorierte, tertiäre Alkylamine oder Mischungen davon verwendet und diese in mindestens einer der Aufbaukomponenten (a), (b) oder (c) emulgiert.

**3.** Verfahren nach Anspruch 1, dadurch gekennzeichnet, daß die niedrigsiedenden, fluorierten oder perfluorierten, tertiären Alkylamine 3 bis 9 Kohlenstoffatome gebunden enthalten.

**4.** Verfahren nach Anspruch 1, dadurch gekennzeichnet, daß man als Treibmittel (d) Perfluor-dimethyl-isopropylamin verwendet.

**5.** Verfahren nach Anspruch 1, dadurch gekennzeichnet, daß man die niedrigsiedenden, fluorierten und/oder perfluorierten, tertiären Alkylamine als Treibmittel (d) in einer Menge von 1 bis 40 Gew.-Teilen, bezogen auf 100 Gew.-Teile der Aufbaukomponenten (a) bis (c) oder (a) und (b), verwendet.

**6.** Verfahren zur Herstellung von zellhaltigen Kunststoffen nach dem Polyisocyanat-Polyadditionsverfahren durch Umsetzung von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart von

d) Treibmitteln,

e) Katalysatoren,

f) Hilfsmitteln und/oder Zusatzstoffen,

dadurch gekennzeichnet, daß man als Treibmittel (d) Mischungen verwendet, die enthalten

d1) mindestens ein niedrigsiedendes, fluoriertes und/oder perfluoriertes tertiäres Alkylamin und

d2) mindestens ein weiteres von (d1) verschiedenes, physikalisch wirkendes und oder chemisches Treibmittel.

**7.** Verfahren nach Anspruch 6, dadurch gekennzeichnet, daß die physikalisch wirkenden Treibmittel (d2) ausgewählt sind aus der Gruppe der Alkane mit 4 bis 12 Kohlenstoffatomen,
Cycloalkane mit 4 bis 6 Kohlenstoffatomen,
linearen und cyclischen Ether mit 2 bis 5 Kohlenstoffatomen,
aliphatischen Carbonsäureester mit einem Siedepunkt von maximal 142°C, aliphatischen oder cycloaliphatischen Ketone mit 3 bis 5 Kohlenstoffatomen,
teilhalogenierten Fluorchlorkohlenwasserstoffe mit 1 oder 2 Kohlenstoffatomen,
perfluorierten, linearen oder cyclischen Ether mit 4 bis 12 Kohlenstoffatomen und
der fluorierten oder perfluorierten Kohlenwasserstoffe mit 3 bis 8 Kohlenstoffatomen.

**8.** Verfahren nach Anspruch 6, dadurch gekennzeichnet, daß die physikalisch wirkenden Treibmittel (d2) ausgewählt sind aus der Gruppe der fluorierten Kohlenwasserstoffe mit 3 bis 6 Kohlenstoffatomen, die mindestens ein Wasserstoffatom gebunden haben und der perfluorierten Kohlenwasserstoffe mit 4 bis 7 Kohlenstoffatomen und aus Mischungen davon.

**9.** Verfahren nach Anspruch 6, dadurch gekennzeichnet, daß die Treibmittelmischungen (d) die fluorierten und/oder perfluorierten, tertiären Alkylamine (d1) und die von (d1) verschiedenen, physikalisch wirkende Treibmittel (d2) im Gewichtsverhältnis von 90:10 bis 10:90 enthalten.

**10.** Verfahren nach Anspruch 6, dadurch gekennzeichnet, daß die Treibmittelmischung (d) aus (d1) und den von (d1) verschiedenen, physikalisch wirkenden Treibmitteln (d2) in mindestens einer der Aufbaukomponenten (a), (b) oder (c) emulgiert wird.

**11.** Verfahren nach Anspruch 6, dadurch gekennzeichnet, daß die chemisch wirkenden Treibmittel ausgewählt sind aus der Gruppe, bestehend aus Wasser, Ameisensäure, organischen Mono- und Polycarbonsäuren mit einem Molekulargewicht von 60 bis 300, Ammonium- und Aminsalzen der Ameisensäure und/oder organischen Mono- und/oder Polycarbonsäuren mit einem Molekulargewicht von 60 bis 300 und Mischungen aus mindestens zwei dieser chemisch wirkenden Treibmittel.

**12.** Verfahren nach Anspruch 6, dadurch gekennzeichnet, daß die Treibmittelmischung (d), bezogen auf das Gesamtgewicht von (d1) und (d2) enthält

d1) mindestens 30 Gew.-% mindestens eines niedrigsiedenden, fluorierten und/oder perfluorierten, tertiären Alkylamins und

d2) maximal 70 Gew.-% mindestens eines weiteren, von (d1) verschiedenen, physikalisch wirkenden und/oder chemischen Treibmittels.

**13.** Verfahren nach Anspruch 6, dadurch gekennzeichnet, daß die Treibmittelmischung (d), bestehend aus (d1) und (d2), in einer Menge von 1 bis 40 Gew.-Teilen, bezogen auf 100 Gew.-Teile der Aufbaukomponenten (a) bis (c) oder (a) und (b), verwendet wird.

**14.** Treibmittelhaltige Emulsionen, die enthalten

i) mindestens ein niedrigsiedendes, in den Aufbaukomponenten (a), (b) oder (c) schwer- oder unlösliches, fluoriertes oder perfluoriertes, tertiäres Alkylamin mit 3 bis 9 Kohlenstoffatomen und

ii) mindestens ein organisches und/oder modifiziertes, organisches Polyisocyanat (a) oder mindestens eine höhermolekulare Verbindung mit mindestens zwei reaktiven Wasserstoffatomen (b) oder mindestens ein niedermolekulares Kettenverlängerungs- und/oder Vernetzungsmittel (c) oder eine Mischung aus (b) und (c).

**15.** Treibmittelhaltige Emulsionen, die bestehen aus

i) 1 bis 40 Gew.-Teilen, pro 100 Gew.-Teilen von (a), (b), (c) oder (b) und (c), mindestens eines niedrigsiedenden, in den Aufbaukomponenten (a), (b) oder (c) schwer- oder unlöslischen, fluorierten oder perfluorierten, tertiären Alkylamins mit 3 bis 9 Kohlenstoffatomen (d1) oder einer Mischung (d), die ihrerseits besteht aus (d1) und mindestens einem niedrigsiedenden, von (d1) verschiedenen, in (a) bis (c) schwer- oder unlöslichen, physikalisch wirkenden Treibmittel (d2)

und

ii) mindestens einem organischen und/oder modifizierten organischen Polyisocyanat (a) oder mindestens einer höhermolekularen Verbindung mit mindestens zwei reaktiven Wasserstoffatomen (b) oder mindestens einem niedermolekularen Kettenverlängerungs- und/oder Vernetzungsmittel (c) oder einer Mischung aus (b) oder (c).

**16.** Treibmittelhaltige Emulsionen nach Anspruch 15, dadurch gekennzeichnet, daß die Treibmittelmischung (d) besteht aus (d1) und mindestens einem niedrigsiedenden, fluorierten und/oder perfluorierten Kohlenwasserstoff mit 3 bis 8 Kohlenstoffatomen.

**17.** Nach dem Polyisocyanat-Polyadditionsverfahren hergestellte zellhaltige Kunststoffe, die als Treibmittel fluorierte und/oder perfluorierte, tertiäre Alkylamine mit 3 bis 9 Kohlenstoffatomen enthalten.

Europäisches Patentamt

# EUROPÄISCHER RECHERCHENBERICHT

Nummer der Anmeldung

EP 92 10 8915

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br><br><br><br><br><br>A | DATABASE WPIL<br>Week 9107, 17. April 1991<br>Derwent Publications Ltd., London, GB;<br>AN 91-048152<br>& JP-A-3 000 745 (ASAHI GLASS K. K.) 7. Januar 1991<br>* & Japanese abstract und Chemical Abstract Nr 115:73010F *<br>----- | 1-3,5<br><br><br><br><br><br>6-17 | C08J9/14<br>//C08L75:04 |

| RECHERCHIERTE SACHGEBIETE (Int. Cl.5 ) |
|---|
| C08J |

Der vorliegende Recherchenbericht wurde für alle Patentansprüche erstellt

| Recherchenort | Abschlußdatum der Recherche | Prüfer |
|---|---|---|
| DEN HAAG | 30 SEPTEMBER 1992 | René OUDOT |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument